# EUROPEAN PATENT APPLICATION

(11) **EP 2 302 896 A2**
(43) Date of publication of application: **30.03.2011**
(21) Application number: 10170414.6
(22) Date of filing: 22.07.2010
(51) Int. Cl.: H04N 1/41

(54) **Data processing apparatus and data processing method for compressing image data**

(30) Priority: 10.08.2009 JP 2009186140
(71) Applicant: Canon Kabushiki Kaisha, Tokyo 146-8501 (JP)
(72) Inventor: ISHII, Hirokazu, Ohta-ku Tokyo (JP)
(74) Representative: Derham, Cassandra Virginie

(57) **Abstract**

A data processing apparatus (100) which compresses image data determines whether each of a plurality of regions obtained by segmenting the image data is a first region in which all the pixels are represented by a specific color. Upon determining that the region is not the first region, the apparatus determines whether the region is a second region (501) adjacent to the first region or a third region (502) which is not adjacent to the first region. The apparatus sets the compression rate of the image data of the second region to a rate lower than that of the image data of the third region, and compresses the image data of the second and third regions.

## Description

### BACKGROUND OF THE INVENTION

### Field of the Invention

The present invention relates to a data processing apparatus which compresses data and a data processing method using the data processing apparatus.

### Description of the Related Art

Conventionally, when printing data stored in a host terminal or the like using a printer, the host terminal converts the data into a data format that can be processed by the printer, and transmits the converted data as a data string to the printer. The printer then rearranges the data string and converts its resolution. The processes performed by the host terminal at this time include color space conversion processing and error diffusion processing. These processes generally vary depending on print settings such as the type of paper to be used and print quality.

Recently, with advances in the performance and function of printers, some printers can themselves perform the color space conversion processing, the error diffusion processing, and the like. For example, there is available a system in which a host terminal performs only data coding and transmits the encoded data to a printer, and the printer prints the data upon performing decoding, color space conversion processing, error diffusion processing, resolution conversion processing, and the like, itself.

A host terminal in such a system uses JPEG (Joint Photographic Experts Group) as a coding system for image data coding. JPEG is a standard widely used as a printing system for digital cameras and the like. This system is often used because it uses a general data format and can reduce the size of data to be transferred because of its high compression rate. In addition, some printers are equipped with JPEG decoders as hardware for implementing a copy function, and can perform high-speed decoding. For these reasons, JPEG is widely used.

JPEG is based on the consideration that the human visual characteristics are not sensitive to high-frequency components, and implements high compression rates by reducing high-frequency components after the conversion of an image signal from a spatial domain to a frequency domain. In this case, conversion processing to a frequency domain is performed for each block of data called an MCU (Minimum Cording Unit).

Japanese Patent Laid-Open No. 2000-13612 has proposed a system which improves compression rates and image quality by compressing a character region using compression processing for characters, lossless compression for a line drawing region, and lossy compression for a picture region. Japanese Patent Laid-Open No. 11-215498 has proposed a system which improves compression rates by performing lossless compression on a region of interest and lossy compression on other regions at higher compression rates with increases in distance from the region of interest.

Although the technique disclosed in Japanese Patent Laid-Open No. 2000-13612 can prevent deterioration in the image quality of character images and line drawing regions, boundary irregularity may occur at the boundary between a character image or line drawing region having undergone lossless compression and a picture region having undergone lossy compression. This may lead to deterioration in image quality. In addition, according to Japanese Patent Laid-Open No. 11-215498, a region of interest is determined by the detection of the line of sight of a user or the like. However, all regions other than a region of interest are compressed using lossy compression, boundary irregularity may occur as in the above case, resulting in deterioration in image quality.

### SUMMARY OF THE INVENTION

It is desirable to eliminate the above-mentioned problems with the conventional technology.

Specifically, it is desirable to prevent deterioration in image quality by reducing boundary irregularity.

The present invention in its first aspect provides a data processing apparatus as specified in claims 1 to 6.

The present invention in its second aspect provides a data processing method as specified in claims 7 and 8.

The present invention in its third aspect provides a computer program as specified in claims 9 and 10.

The present invention in its fourth aspect provides a storage medium as specified in claim 11.

According to the present invention, it is possible to prevent deterioration in image quality by reducing boundary irregularity.

Further features of the present invention will become apparent from the following description of exemplary embodiments with reference to the attached drawings.

### BRIEF DESCRIPTION OF THE DRAWINGS

Fig. 1 is a block diagram showing the arrangement of a data processing apparatus;

Fig. 2 is a block diagram showing the arrangement of a printer;

Fig. 3 is a flowchart showing a procedure for compressing image data in the first embodiment;

Figs. 4A and 4B are views for explaining how image data is segmented into band regions;

Fig. 5 is a view for explaining how different compression rates are set for the respective blocks;

Fig. 6 is a flowchart showing a procedure for generating image data for printing;

Fig. 7 is a flowchart showing a procedure for compressing image data in the second embodiment;

Figs. 8A and 8B are views for explaining how image data is segmented into regions; and

Fig. 9 is a view for explaining how different compression rates are set for the respective blocks.

### DESCRIPTION OF THE EMBODIMENTS

Preferred embodiments of the present invention will now be described hereinafter in detail, for the purpose of example only and with reference to the accompanying drawings. The same reference numerals denote the same constituent elements, and a repetitive description of the elements will be omitted.

### [First Embodiment]

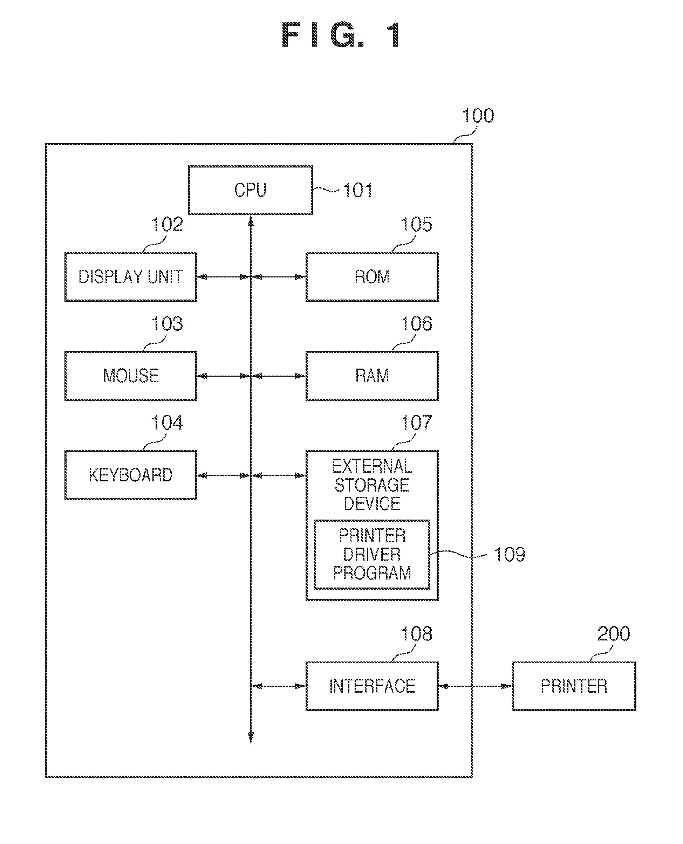

Fig. 1 is a block diagram showing the arrangement of a data processing apparatus 100 in a printing system. The data processing apparatus 100 includes a CPU 101, a display unit 102, a mouse 103, a keyboard 104, a ROM (read-only memory) 105, a RAM (random access memory) 106, and an external storage device 107. The data processing apparatus 100 is connected to a printer 200 via an interface 108. The external storage device 107 is, for example, a hard disk or flash ROM, which stores a printer driver program 109 for controlling the generation of print data and the printer 200. If there is no external storage device, the ROM 105 may store the printer driver program 109.

The printer driver program 109 performs skip data generation processing and generation processing of encoded data losslessly-compressed in the PackBits format or the like. The printer driver program 109 also performs generation processing of encoded data lossy compressed in the JPEG format or the like by using DCT (Direct Cosine Transform) transformation, which is one of the orthogonal transformation systems, quantization, Huffman coding, and the like. The generated skip data and encoded data are transferred as print data to the printer 200 via the interface 108.

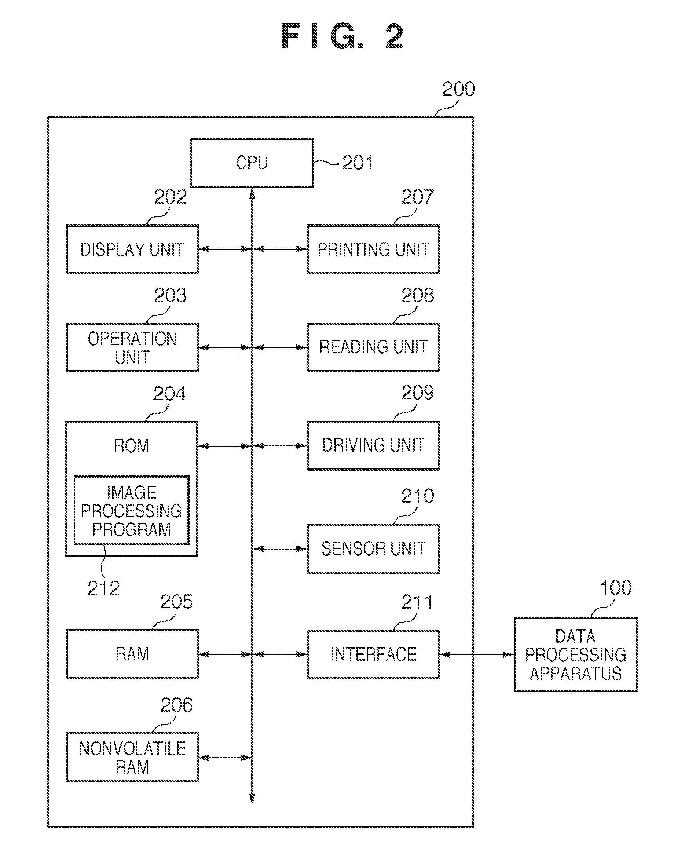

Fig. 2 is a block diagram showing the arrangement of the printer 200 in the printing system. The printer 200 includes a CPU (Central Processing Unit) 201, a display unit 202, an operation unit 203, a ROM 204, a RAM 205, a nonvolatile RAM 206, a printing unit 207, a reading unit 208, a driving unit 209, and a sensor unit 210. The printer 200 includes an interface 211, and is connected to the data processing apparatus 100. The ROM 204 stores an image processing program 212 to perform decoding processing for decoding encoded data, color space conversion processing, error diffusion processing, and the like. The image processing program 212 performs conversion processing such as color space conversion and error diffusion processing for decoded data, and supplies print data corresponding to the printing form of the printing unit 207 to the printing unit 207. In addition, the image processing program 212 issues a paper feed request to the printing unit 207.

The nonvolatile RAM 206 is a battery backed-up SRAM (Shadow RAM) or the like, which stores, for example, data unique to the printer 200. The printing unit 207 executes printing operation when the print data generated by the image processing program 212 reaches a predetermined amount necessary for printing operation. When the image processing program 212 issues a paper feed request, the printing unit 207 moves a printing position on a printing medium by a designated amount. The reading unit 208 reads a document image, and outputs red (R), green (G), and blue (B) luminance data. The driving unit 209 includes a stepping motor for driving the feed and delivery rollers in the printing unit 207 and reading unit 208 and a driver circuit to control gears for transmitting the driving force of the stepping motor. The sensor unit 210 includes a printing sheet width sensor, a printing sheet presence/absence sensor, document width sensor, document presence/absence sensor, and printing medium sensor. The CPU 201 detects the states of a document and printing medium based on the information obtained by these sensors.

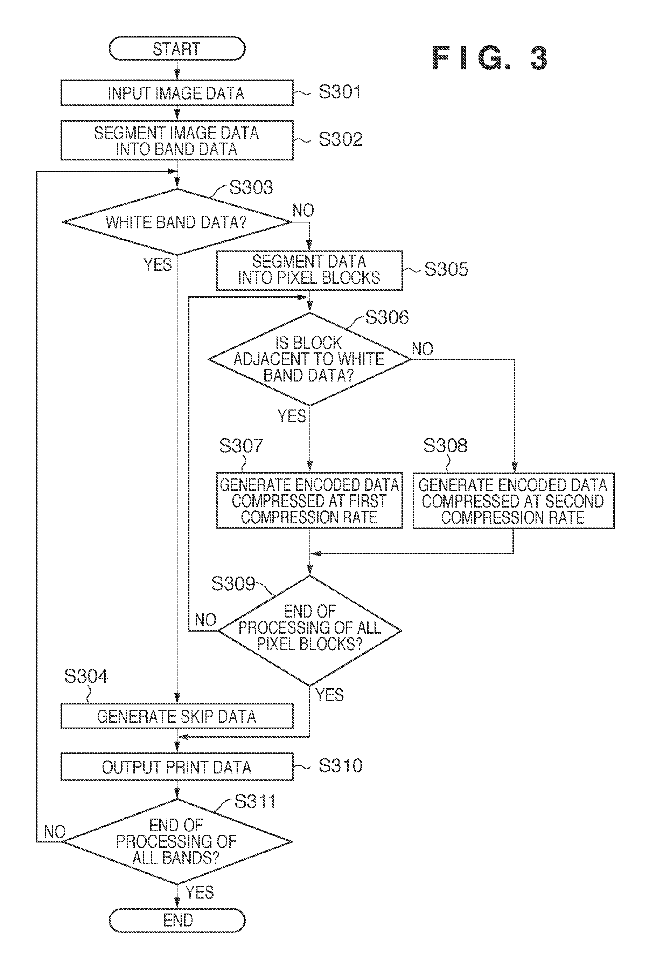

Fig. 3 is a flowchart showing a procedure for compressing image data for printing performed by the printer driver program 109 in the data processing apparatus 100. The CPU 101 of the data processing apparatus 100 executes this flowchart. First of all, in step S301, the CPU 101 supplies image data to the print data generation processing unit of the printer driver program 109. In step S302, the CPU 101 segments the image data into a plurality of band regions constituting eight lines. In step S303, the CPU 101 determines whether all the pixel values contained in the data of each segmented band region are the same color: in this embodiment, that color is white (R, G, B) = (255, 255, 255). The band with all pixels with the same color is defined as the first band region. The specific same color of the first band region could be white or any color that will not be printed, for example, a color that matches the color of the paper on which the data is intended to be printed. This is the first determination step in the process. Upon determining that all the pixel values in the band region are white (in this case), the CPU 101 generates skip data based on the data of the band region in step S304. The process then advances to step S310. If the CPU 101 determines that this region is not a band region in which all the pixel values are white, the process advances to step S305.

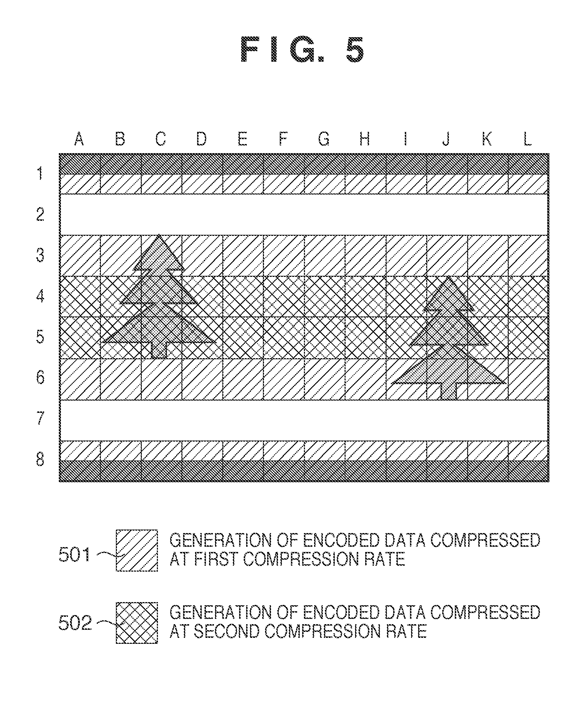

In step S305, the CPU 101 segments the region into pixel blocks constituting 8 lines x 8 pixels. In step S306, the CPU 101 determines whether each segmented pixel block is adjacent to the data of a band region in which all the pixel values are white. This is the second determination in the process. If the CPU 101 determines in step S306 that the pixel block is adjacent to the data of a band region in which all the pixel values are white, the process advances to step S307. In step S307, the CPU 101 performs DCT transformation, quantization, and Huffman coding to generate encoded data lossy-compressed in the JPEG format at the first compression rate lower than the second compression rate used in step S308 (to be described below). The pixel blocks adjacent to the first band region (unshaded in Fig. 5) constitute a band region, shown as having diagonal hatching in Fig. 5. In this embodiment, therefore, the band region constituted by pixel blocks determined in this manner is defined as a second band region.

If the CPU 101 determines in step S306 that the pixel block is not adjacent to the data of the band region in which all the pixel values are white, the process advances to step S308. In step S308, the CPU 101 performs DCT transformation, quantization processing, and Huffman coding to generate encoded data lossy-compressed in the JPEG format at the second compression rate higher than the first compression rate used in step S307. Pixel blocks which are not adjacent to the first band region also constitute a band region, shown as cross-hatched in Fig. 5. In this embodiment, therefore, the band region constituted by pixel blocks determined in this manner is defined as a third band region. Although the CPU 101 changes the compression rate in steps S307 and S308, it is possible to implement this operation by setting the compression rate in the quantization table which is used for the quantization processing in step S308 to a rate higher than the compression rate in the quantization table which is used for the quantization processing in step S307.

In step S309, the CPU 101 determines whether all the segmented pixel blocks have been processed. If the CPU 101 determines that the processing for all the pixel blocks is not complete, the process returns to step S306. If the CPU 101 determines that the processing for all the pixel blocks is complete, the process advances to step S310. In step S310, the CPU 101 transfers skip data or encoded data to the printer 200. In step S311, the CPU 101 determines whether the data of all the segmented band regions have been processed. If the CPU 101 determines that the processing for the data of all the band regions is not complete, the process returns to step S303. If the CPU 101 determines in step S311 that the processing for the data of all the band regions is complete, the CPU 101 terminates this processing. After the processing shown in Fig. 3, the CPU 101 transmits the encoded data to the printer 200 via the interface 108.

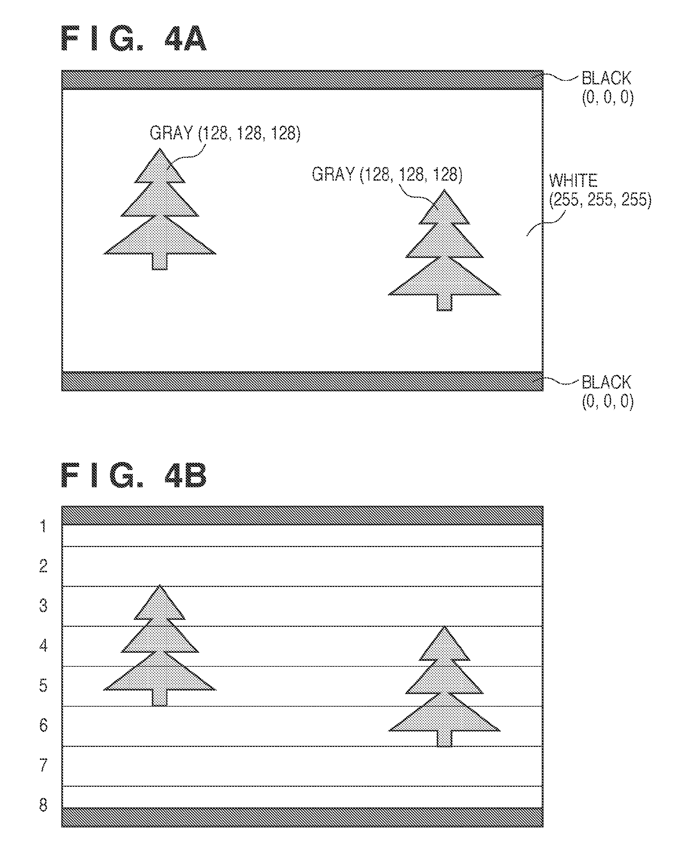

Figs. 4A, 4B, and 5 are views for explaining the print data generation processing performed by the printer driver program 109 in the data processing apparatus 100. Fig. 4A is a view showing the image data input to the print data generation processing unit of the printer driver program 109. Assume that this data is constituted by 96 pixels wide x 64 pixels high. Fig. 4B is a view showing how the image data shown in Fig. 4A is segmented into the data of band regions constituted by eight rasters. Image data is constituted by 64 pixels in the height direction, and hence is segmented into the data of eight band regions represented by 1 to 8, each 8 pixels high. Of the segmented band regions, the pixel values of all the data of band regions 2 and 7 are white (R, G, B) = (255, 255, 255), and hence skip data is generated (i.e. no compression is performed).

Fig. 5 is a view showing how the data of the band regions shown in Fig. 4B are segmented into pixel blocks constituted by 8 lines x 8 pixels. Image data is constituted by 96 pixels in the width direction, and hence is segmented into 12 pixel blocks (each 8 x 8 pixels) labeled A to L for each band. The pixel blocks (pixel blocks 501 in Fig. 5) contained in the data of band regions 1, 3, 6, and 8 are adjacent to the data of band regions 2 and 7 in which all the pixel values are white (R, G, B) = (255, 255, 255). For this reason, encoded data is generated which is lossy-compressed in the JPEG format at a compression rate lower than the pixel blocks (pixel blocks 502 in Fig. 5) contained in the data of band regions 4 and 5.

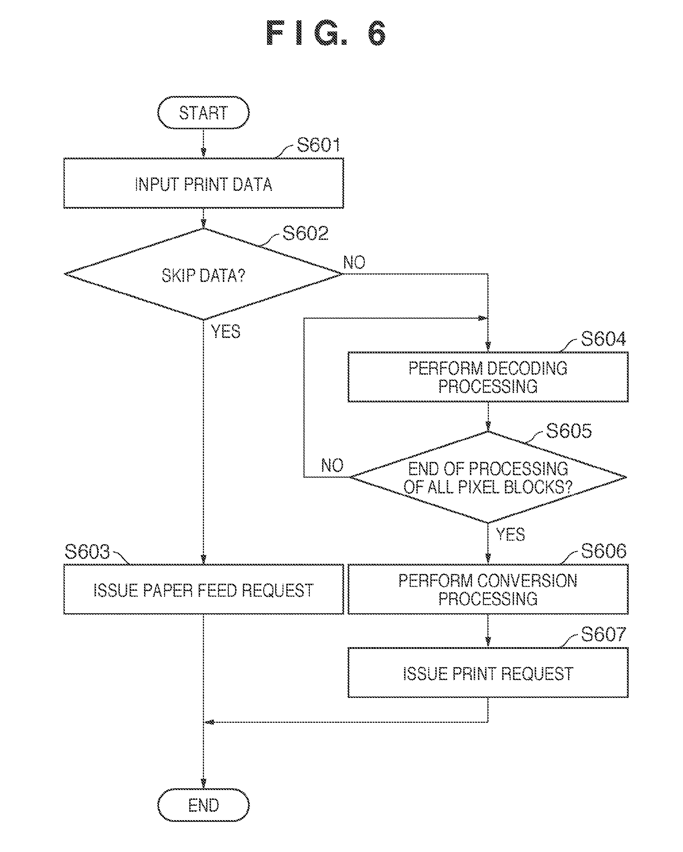

Fig. 6 is a flowchart showing a procedure for print data control processing (printing processing) performed by the image processing program 212. The CPU 201 of the printer 200 executes the processing in Fig. 6. In step S601, the image processing program 212 of the printer 200 receives the print data formed of skip data or encoded data from the data processing apparatus 100 via the interface 211. In step S602, the CPU 201 determines whether the input print data is skip data. Upon determining that the input print data is skip data, the CPU 201 issues a paper feed request to the printing unit 207 (S603) and skips a printing position. The CPU 201 then terminates this processing. When a paper feed request is issued, the printing unit 207 moves the printing position by a designated amount. If the input print data is not skip data but is losslessly- or lossy-compressed encoded data, the process advances to step S604. In step S604, the CPU 201 performs decoding processing.

In step S605, the CPU 201 determines whether all pixel blocks have been processed. If the CPU 201 determines that the processing for all the pixel blocks is not complete, the process returns to step S604. If the CPU 201 determines that the processing for all the pixel blocks is complete, the process advances to step S606. In step S606, the CPU 201 performs conversion processing such as color space conversion and error diffusion processing to generate data in a print format corresponding to the printing unit 207. In step S607, the CPU 201 supplies print data corresponding to the print format of the printing unit 207 to the printing unit 207. The CPU 201 then terminates this processing. The printing unit 207 executes printing operation when print data reaches a predetermined amount necessary for printing operation.

As described above, according to this embodiment, this apparatus regards a band region in which all the pixels are expressed by white (or any specific color, according to the print settings) as a region not to be printed, and adds skip data to print data to skip printing the corresponding portion. In addition, the apparatus generates encoded data compressed at different compression rates corresponding to the distances from a band region expressed by white. This makes a compression rate of the region adjacent to a white region lower than a compression rate of the region which is not adjacent to the white region, thereby preventing boundary irregularity which has occurred in the prior art.

Although this embodiment has exemplified the case in which image data is segmented into a plurality of band regions, the present invention is not limited to band regions. Each region may have one pixel or a plurality of pixels, and may be a shape other than a band.

### [Second Embodiment]

The second embodiment will be described next. Note that the block diagrams showing the arrangements of the data processing apparatus 100 and printer 200 according to this embodiment are the same as those in the first embodiment, and hence a description of the arrangements will be omitted. In addition, since a flowchart for explaining the print data control processing performed by an image processing program 212 in the second embodiment is the same as that in the first embodiment, Fig. 6 will be referred to, and a repeat description of the flowchart will be omitted.

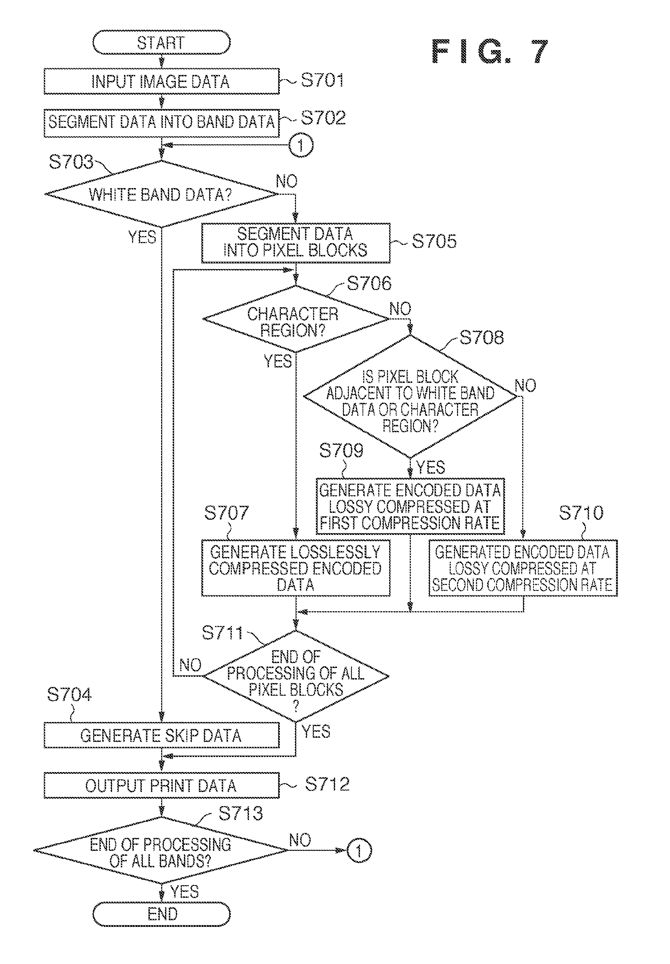

Fig. 7 is a flowchart showing a procedure for print data generation processing performed by a printer driver program 109 in a data processing apparatus 100. A CPU 101 of the data processing apparatus 100 executes this flowchart. First of all, in step S701, the CPU 101 supplies image data to the print data generation processing unit of the printer driver program 109. In step S702, the CPU 101 segments the image data into the data of band regions constituted by eight lines as described with reference to Fig. 4B above. In step S703, the CPU 101 determines whether all the pixel values of the data of each segmented band region are white (R, G, B) = (255, 255, 255). If it is determined that all the pixel values of the data of the band region are white, the CPU 101 generates skip data in step S704. The process then advances to step S712, in which the print data is output. If the CPU 101 determines that all the pixel values of the data of the band region are not white, the process advances to step S705. In step S705, the CPU 101 segments the band regions into pixel blocks made up of 8 x 8 pixels.

In step S706, the CPU 101 determines whether each segmented pixel block contains a character image. This is the first determination step of the process according to the second embodiment. Upon determining that the pixel block contains a character image (and is thus referred to as a "first block"), the CPU 101 encodes data using lossless compression by the PackBits system in step S707. The process then advances to step S711 (described below). If the CPU 101 determines that the pixel block contains no character image in S706, the process advances to step S708. In step S708, the CPU 101 determines whether the pixel block is adjacent to the data of a band region in which all the pixel values are white or a pixel block containing a character image. This is the second determination step in the process of the second embodiment. If the CPU 101 determines that the pixel block is a block adjacent to the data of a band region in which all the pixel values are white or a pixel block containing a character image (i.e. the CPU's determination unit) determines that the pixel block is a "second block"), the process advances to step S709. In step S709, the CPU 101 performs DCT transformation, quantization processing, and Huffman coding to generate encoded data lossy compressed in the JPEG format at the first compression rate lower than the second compression rate used in step S710 (to be described later). The process then advances to step S711. If the CPU 101 determines in S708 that the pixel block is a block which is adjacent to neither the data of a band region in which all the pixel values are white nor a pixel block containing a character image (i.e. the CPU determines that the pixel block is a "third block" or third type of block), the process advances to step S710. In step S710, the CPU 101 performs DCT transformation, quantization processing, and Huffman coding to generate encoded data lossy compressed in the JPEG format at the second compression rate higher than the first compression rate used in step S709. The process then advances to step S711. Although the CPU 101 changes the compression rate in steps S709 and S710, it is possible to implement this operation by setting the compression rate in the quantization table which is used for the quantization processing in step S710 to a rate higher than the compression rate in the quantization table which is used for the quantization processing in step S709.

In step S711, the CPU 101 determines whether all the segmented pixel blocks have been processed. In this case, if the CPU 101 determines that the processing for all the pixel blocks is not complete, the process returns to step S706. If the CPU 101 determines that the processing for all the pixel blocks is complete, the process advances to step S712. In step S712, the CPU 101 transfers skip data or encoded data to the printer 200. In step S713, the CPU 101 determines whether all the segmented band regions have been processed. In this case, if the CPU 101 determines that the processing for all the band regions is not complete, the process returns to step S703. Upon determining that the processing for all the band regions is complete, the CPU 101 terminates this processing.

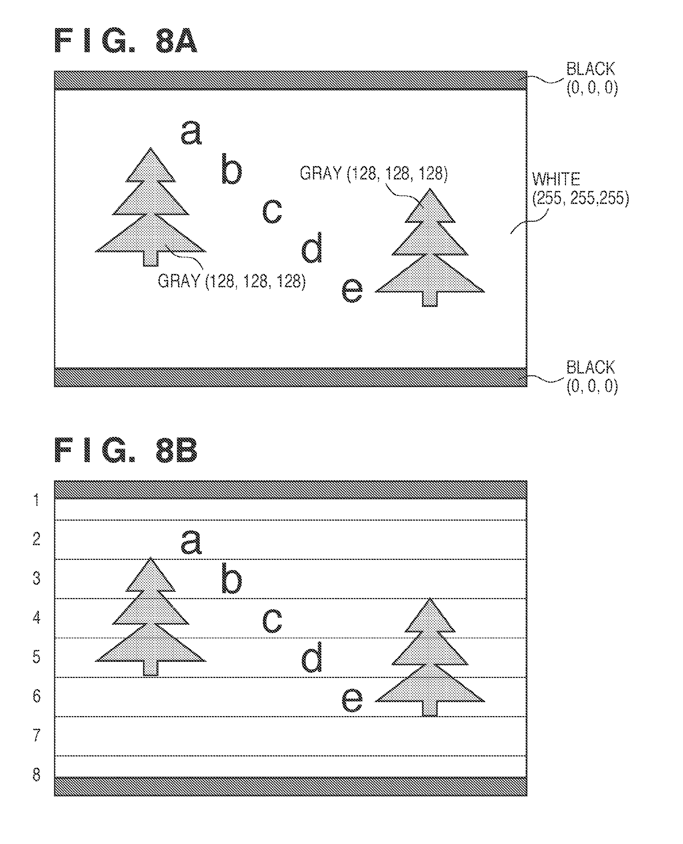

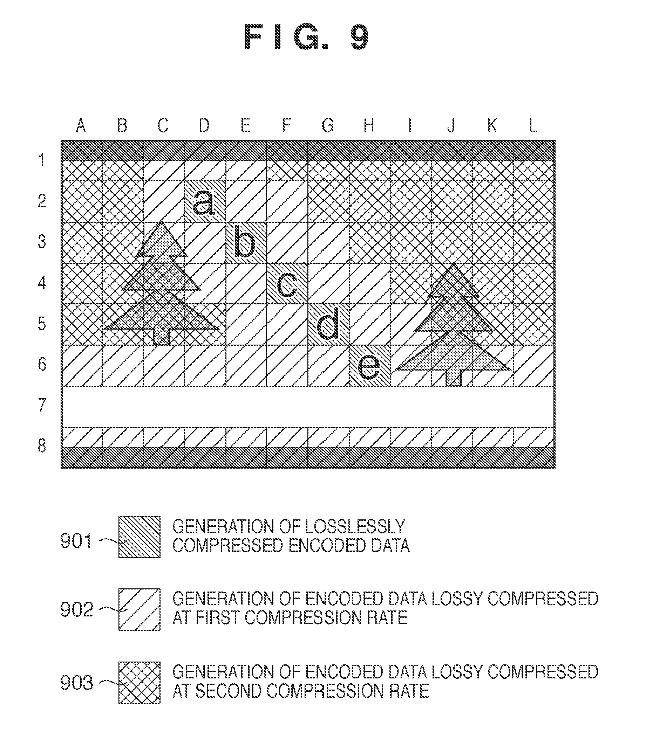

Figs. 8A, 8B, and 9 are views for explaining the print data generation processing performed by the printer driver program 109 in the data processing apparatus 100. Fig. 8A is a view showing the image data input to the print data generation processing unit of the printer driver program 109. Assume that this data is constituted by 96 pixels wide x 64 pixels high. Tree shapes are gray (R,G,B are 128,128,128), a border is black (R,G,B are 0,0,0) and the background is white (R,G,B are 255,255,255). There are also five characters a, b, c, d and e in the image data. Fig. 8B is a view showing how the image data shown in Fig. 8A is segmented into the data of band regions constituting eight rasters. Image data is constituted by 64 pixels in the height direction, and hence is segmented into the data of eight band regions represented by 1 to 8. Of the data of the segmented band regions, all the pixel values of the data of the data of band region 7 are white (R, G, B) = (255, 255, 255), and hence skip data is generated in print data generation processing.

Fig. 9 is a view showing how the data of the band regions shown in Figs. 8A and 8B are segmented into pixel blocks constituting 8 x 8 pixels. Image data constitutes 96 pixels in the width direction, and hence is segmented into 12 pixel blocks represented by A to L for each band. If the upper left pixel block of the image data is represented by (1, A), and lower right pixel block is represented by (8, L), five pixel blocks (pixel blocks 901 in Fig. 9) (2, D), (3, E), (4, F), (5, G), and (6, H) contain character images. For the blocks, therefore, data is encoded with lossless compression in the PackBits format or the like. The CPU 101 processes pixel blocks adjacent to band region 7 and pixel blocks (pixel blocks 902 in Fig. 9) adjacent to the pixel blocks containing character images described above to encode data using lossy compression in the JPEG format at a compression rate lower than that of other pixel blocks (pixel blocks 903 in Fig. 9).

This embodiment performs lossless compression and encodes a pixel block containing a character image and also encodes data using lossy compression while switching compression rates in accordance with the distance from the losslessly-compressed and encoded pixel block. This makes it possible to reduce boundary irregularity occurring at the boundary between a losslessly-compressed region and a lossy-compressed region at the time of decoding. Note that in the second embodiment described above, a pixel block to undergo lossless compression and to be encoded is defined as a pixel block containing a character image. However, it is possible to define, as such a pixel block, for example, a pixel block containing a region such as an image boundary where lossy compression leads to deterioration in image quality.

The first and second embodiments have exemplified the cases in which different apparatuses perform coding processing and decoding processing. However, a single apparatus may be configured to perform both of them. For example, the present invention may be applied to a system in which, for example, a copying machine performs coding processing for document data at the time of reading, stores the data in an internal memory, and performs decoding processing for the encoded data in the internal memory at the time of printing, thereby printing the data.

### <Other Embodiments>

Aspects of the present invention can also be realized by a computer of a system or apparatus (or devices such as a CPU or MPU (microprocessing unit)) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments, but is defined by the scope of the accompanying claims.

## Claims

1. A data processing apparatus (100) for compressing image data, the apparatus comprising:
determination means (101) configured to determine whether each of a plurality of regions (1,2,...8) obtained by segmenting the image data is a second region (501) adjacent to a first region (2,7) in which all pixels are represented by a specific color, or a third (502) region which is not adjacent to the first region; and
compression means (101) configured to compress image data of the second region (501) and third region (502),
wherein said compression means (101) is configured to compress image data of the second region (501) at a compression rate lower than a compression rate for image data of the third region (502).

2. The apparatus according to claim 1, wherein the specific color is a color other than colors to be printed.

3. The apparatus according to claim 1 or 2, wherein the specific color is white.

4. The apparatus (100) according to claim 1, further comprising:
means for segmenting the second and third regions into a plurality of blocks of pixels, wherein
the determination means (101) comprises:
first determination means (101) configured to determine whether each of the plurality of blocks is a first block (901) containing image data representing a character image, and
second determination means (101) configured to determine, when each block is not determined as the first block (901), whether said each block is: a third (902) block adjacent to at least one of the first block (901) and a second block in the first region (7); or a fourth block (903) which is adjacent to neither the first block nor the second block; and
the compression means (101) is configured to compress image data of the third block (902) and of the fourth block (903),
wherein said compression means (101) is configured to compress the image data of the third block at a compression rate lower than a compression rate for the image data of the fourth block.

5. The apparatus according to claim 4, wherein said compression means (101) is configured to perform lossy compression on the image data of the third block (902) and of the fourth block (903).

6. The apparatus according to claim 4 or 5, wherein said compression means (101) is configured to perform lossless compression on the image data of the first block (901).

7. A data processing method executed by a data processing apparatus which compresses image data, the method comprising the steps of:
determining (S306) whether each of a plurality of regions obtained by segmenting (S302) the image data is a second region (501) adjacent to a first region (2,7) in which all pixels are represented by a specific color, or a third region (502) which is not adjacent to the first region; and
compressing image data of the second region and third region,
wherein in the compressing step, image data of the second region is compressed (S307) at a compression rate lower than a compression rate (S308) for image data of the third region.

8. The data processing method according to claim 7, further comprising:
segmenting (S705) the second and third regions into a plurality of blocks containing a predetermined number of pixels;
determining (S706) whether each of the plurality of blocks is a first block (901) containing image data representing a character image;
determining, when each block is not determined as the first block, whether said each block is: a third block (902) adjacent to at least one of the first block (901) and a second block in the first region (7); or a fourth block (903) which is adjacent to neither the first block nor the second block; and
compressing image data of the third block and fourth block,
wherein in the compressing step, the image data of the third block is compressed (S709) at a compression rate lower than a compression rate (S710) for the image data of the fourth block.

9. A computer program which, when run on a computer, causes the computer to perform as the data processing apparatus of claims 1 to 6.

10. A computer program which, when run on a computer, causes the computer to perform the method of claim 7 or 8.

11. A storage medium having stored thereon a computer program of claim 9 or 10.
